# EUROPÄISCHE PATENTANMELDUNG

(11) **EP 1 398 937 A2**
(43) Veröffentlichungstag der Anmeldung: **17.03.2004**
(21) Anmeldenummer: 03019876.6
(22) Anmeldetag: 01.09.2003
(51) Int. Cl.: H04L 29/06

(54) **System zur Erfassung und Anzeige eines Sicherstatus von Geräten**

(30) Priorität: 16.09.2002 DE 10242917
(71) Anmelder: SIEMENS AKTIENGESELLSCHAFT, 80333 München (DE)
(72) Erfinder: Gerlach, Hendrik, 91058 Erlangen (DE); Talanis, Thomas, 91336 Heroldsbach (DE); Volkmann, Frank, 90475 Nürnberg (DE)

(57) **Zusammenfassung**

Die Erfindung betrifft ein System sowie ein Verfahren zum Erfassen und zur Anzeige eines Sicherheitsstatus von Geräten, insbesondere Automatisierungsgeräten bzw. -systemen. Die Geräte (1) besitzen einen Detektormechanismus (3) zur Erkennung eines Sicherheitsstatus sowie eine externe (4) und eine interne Anzeige (5) für den jeweiligen Status. Über eine Management Information Base (MIB) (6) kann mithilfe von Simple Network Management Protokollen (SNMP) auf die interne Anzeige 5 zugegriffen werden. Der Status der internen Anzeige wird über eine Datenübertragungsvorrichtung (7) innerhalb des Systems weitergeleitet und mithilfe von Central Security Server für Automation (CSSA) verarbeitet. Sammelanzeigen (8, 88) können auf beliebiger Hierarchieebene im System den Sicherheitsstatus der jeweiligen unterlagerten Geräte (1) bzw. Gerätekomplexe (2) anzeigen. Geräte ohne Sicherheitsfunktionalität (10) können durch einen Stellvertreter (11) in das System integriert werden.

## Beschreibung

Die Erfindung betrifft ein System sowie ein Verfahren zur Erfassung und Anzeige des Sicherstatus von Geräten sowie zu Komplexen zusammengefassten Geräten.

Mit der Verbreitung offener Kommunikationsmedien wie beispielsweise dem Internet oder Intranet und der dabei verwendeten standardisierten Protokolle (z.B. TCP/IP) in der Automatisierungstechnik gewinnen Sicherheitsaspekte zunehmend an Bedeutung. Es ist zu erwarten, dass Automatisierungsgeräte und -systeme in Zukunft vermehrt in einer offenen Kommunikationsumgebung eingesetzt werden. Deshalb müssen sie mit leistungsfähigen Sicherheitsmechanismen ausgerüstet werden. Hierbei spricht man von sogenannten Security-Erweiterungen. Die Aufrüstung mit Sicherheitsmechanismen bzw. Einführung von Geräten, welche mit Sicherheitsmechanismen ausgestattet sind, wird in der Automatisierungstechnik nicht auf einen Schlag erfolgen. Hieraus wird sich eine Koexistenz von Geräten mit und ohne Sicherheitsmechanismen ergeben. Beispielsweise stellen Altgeräte sowie Low-Cost-Geräte in der Regel keine Sicherheitsmechanismen zur Verfügung. Auch in Geräten mit Sicherheitsmechanismen können einzelne Sicherungen zumindest temporär, beispielsweise für Inbetriebnahmen, abgeschaltet sein.

Unter Sicherheit wird im hier verwendeten Zusammenhang folgendes verstanden:
- Die Geräte bzw. das Automatisierungssystem verfügt unter einen Zugriffsschutz, d.h. Benutzer können nur mit ihnen zugeordneten Rechten auf die Ressourcen des Gerätes zugreifen.
- Es existiert ein Kommunikationsschutz, d.h. der Datentransfer von und zu Automatisierungsgeräten bzw. der Datentransfer über Netzwerkkomponenten innerhalb eines Automatisierungssystems ist geschützt. Hierbei sind die Daten sowohl gegen Veränderungen des Dateninhalts (Integrität), unberechtigtes Mithören (Vertraulichkeit) als auch Verletzung der Echtheit (Sicherstellen der Authentizität einschließlich des Abweisens von Wiederholungen bereits gesendeter Nachrichten) geschützt.
- Sicherstellen der notwendigen Verfügbarkeit. Hier ist z.B. an einen Schutz gegen DoS-Attacken (Denial-of-Service-Attacke: Eine derartige Attacke ist eine Methode, einen PC über ein Netz mit einer Vielzahl von sinnlosen Anfragen zu belasten. Ziel ist hierbei, dass der PC/Server nicht mehr erreichbar ist) oder Spoofing (Unter Spoofing wird allgemein ein Täuschungsversuch verstanden; beispielsweise können IP-Adressen gefälscht werden).

Neben dem Sicherheitsstatus eines einzelnen Automatisierungsgeräts ist auch die Erkennbarkeit der Sicherheit von Kommunikationskanälen zwischen den beteiligten Geräten und der gesamte Sicherheitsstatus eines Automatisierungssystems von Bedeutung. Durchgängige Lösungen für Sicherheitskonzepte bei Automatisierungsgeräten bzw. -systemen fehlen heutzutage, da die Geräte bisher durch Abschottung von offenen Zugängen gesichert wurden. Demzufolge stellte sich das Problem nicht in dem zukünftig zu erwartenden Umfang. Durch die zunehmende Verbreitung des Internets auch in der Automatisierungstechnik ist die Einführung leistungsfähiger Sicherheitsmechanismen jedoch von Bedeutung.

Der Erfindung liegt die Aufgabe zugrunde, ein System sowie ein Verfahren anzugeben, welches die Erfassung sowie die Anzeige des Sicherheitsstatus eines Gerätes bzw. eines aus mehreren Geräten zusammengefassten Komplex vorort schnell und ohne weitere Hilfsmittel ermöglicht.

Diese Aufgabe wird gelöst durch ein System zur Anzeige und/oder Erfassung eines Sicherheitszustands von Geräten, welche über interne Sicherheitsmechanismen verfügen und/oder aus derartigen Geräten zusammengesetzten Komplexen mit geräteinternen Mitteln zum Feststellen des Sicherheitsstatus mindestens eines Geräts, mindestens einer Anzeigevorrichtung zur externen Anzeige eines Sicherheitsstatus mindestens eines Geräts direkt am Gerät, Anzeigemitteln zur internen Anzeige des Sicherstatus mindestens eines Gerät direkt im Gerät und einer Vorrichtung zur Übertragung von Daten zwischen den Geräten eines Komplexes, wobei der Status der Anzeigemittel zur datentechnischen Weiterverarbeitung im Gerätekomplex vorgesehen ist.

Der Erfindung liegt die Erkenntnis zugrunde, das bei zunehmender Nutzung von offenen Kommunikationsmedien die Sicherheitsaspekte im Bezug auf die an der Kommunikation beteiligten einzelnen Geräte zunehmend an Bedeutung gewinnen. Das Zulassen nur berechtigter Benutzer zu den jeweiligen Geräten sowie eine Gewährleistung von korrekter Übertragung der Daten zwischen unterschiedlichen Geräten steht hierbei im Focus der Sicherheitsaspekte. Um jederzeit Kenntnis über den speziellen Sicherheitsstatus eines Geräts bzw. eines aus mehreren Geräten zusammengesetzten Systems erlangen zu können, ist es somit von Vorteil, wenn die beteiligten Geräte ihren Sicherheitsstatus einem Benutzer anzeigen können. Es ist dann unmittelbar erkennbar, ob ein Gerät über den entsprechenden Sicherheitsstatus verfügt, der für die jeweilige Aufgabe, die das Gerät erfüllt, von Nöten ist. Ein Anwender kann sich direkt entscheiden, ob er beispielsweise das Gerät in Bezug auf eine bestimmte Funktionalität nutzen will. Vorteilhaft ist auch, dass der Status der einzelnen Geräte intern hinterlegt ist, so dass zur datentechnischen Weiterverarbeitung zur Verfügung steht. Dies ermöglicht es, den gesamten Sicherheitszustand von höherwertigen Systemen bzw. Komplexen, die aus mehreren Geräten bestehen anzeigen zu lassen.

Eine weitere vorteilhafte Ausbildung der Erfindung ist dadurch gekennzeichnet, dass das System zur Anzeige und/oder Erfassung des Sicherheitsstatus von Automatisierungsgeräten und/oder Automatisierungssystemen vorgesehen ist. Insbesondere im Automatisierungsumfeld für Produktions- und/oder Fertigungsanlagen wird zu Kommunikationszwecken vermehrt auf das Internet bzw. Intranet zurückgegriffen. Die Verwendung von Standardprotokollen für die Kommunikation ist in diesem Umfeld sehr vorteilhaft, da eine kostengünstige Übertragung von Daten ermöglicht wird. Die Verwendung dieser offenen Kommunikationsmedien hat jedoch zur Folge, dass die Automatisierungssysteme einer Anlage nicht mehr vollständig von der Umwelt abgeschottet sind. Zugriffe auf die Daten von außen durch Hacker werden zunehmend möglich. Aus diesem Grund ist die Einführung von Sicherheitsmechanismen speziell im Automatisierungsumfeld von Interesse. Hierbei steht nicht primär die Sicherung von Daten vor unerlaubtem Mithören im Focus, sondern vielmehr die Absicherung gegen ein Eindringen von auβen, welches einen Produktionsausfall durch Lahmlegen des Automatisierungssystem zur Folge hätte. Um Automatisierungssysteme auch im Rahmen offener Kommunikationsmedien nutzen zu können, ist somit vorteilhaft, wenn die einzelnen, im Automatisierungssystem vorhandenen Geräte sowie das gesamte System über eine einfache Möglichkeit zur Erfassung sowie zur Anzeige des Sicherheitsstatus verfügen. Dem Anlagenbetreiber wird hierdurch jederzeit ermöglicht, den Sicherheitszustand von Teilen der Automatisierung seiner Anlage zu überwachen.

Eine weitere vorteilhafte Ausbildung der Erfindung ist dadurch gekennzeichnet, dass die Anzeigevorrichtung zur visuellen Anzeige des Sicherheitsstatus vorgesehen ist. Hierdurch wird es einem Mitarbeiter auf der Anlage direkt ermöglicht, jederzeit den Sicherheitsstatus eines Automatisierungsgerätes direkt am Gerät abzulesen. Die Anzeige für den Sicherheitsstatus befindet sich auf dem Gerät an Stellen, die auch im eingebauten Zustand (falls zutreffend) gut sichtbar sind. Üblicherweise wird die Anzeige auf der Frontplatte des jeweiligen Geräts installiert. Hierbei werden geeignete Mittel verwendet, die ein Ablesen der Anzeige ohne kompliziertere Bedienvorgänge ermöglichen. Es kann sich dabei beispielsweise um eine Lampe oder eine LED (Leuchtdiode) handeln. Verschiedene Sicherheitsaspekte (z.B. Zugriffssicherheit, Kommunikationssicherheit, Schutz deaktiviert) können beispielsweise über verschiedene Anzeigen dargestellt werden. Hierbei kann es sich um unterschiedliche Farben, verschiedene Zustände, wie Dauerlicht oder Blinken handeln. Auf einem Automatisierungsgerät können auch mehrere Anzeigen parallel angebracht werden, die Information zu unterschiedlichen Sicherheitsaspekten vermitteln. Neben den reinen Automatisierungsgeräten können automatisierungsspezifische Netzwerkkomponenten mit Sicherheitsmechanismen ausgestattet sein und eine entsprechende Sicherheitsanzeige erhalten. Hierbei kann es sich beispielsweise um CP's, Switches, Router, Bridges, oder Automatisierungs-Firewalls handeln.

Eine weitere vorteilhafte Ausbildung der Erfindung ist dadurch gekennzeichnet, dass Zugriffsmittel für automatisierungstechnische Anwenderprogramme auf die internen Anzeigemittel vorgesehen sind. Bei den Anwenderprogrammen handelt es sich beispielsweise um CFC, AWL, Function Block Diagram. Innerhalb dieser Anwenderprogramme ist die Verschaltung von Sicherheitsanzeigen von Einzelkomponenten möglich. Die Sicherheitsanzeigen können wie Automatisierungsfunktionen projektiert werden. Der entsprechende Teil der Anwenderprogramme wird in diesem Fall gegen unberechtigte Veränderung geschützt. Die auf dem jeweiligen Gerät implementierte Software somit vor unberechtigtem Zugriff geschützt.

Eine weitere vorteilhafte Ausbildung der Erfindung ist dadurch gekennzeichnet, dass eine Abfrage des Sicherheitsstatus der internen Anzeigemittel durch Standardprotokolle über eine geräteinterne Informationsbasis vorgesehen ist. Die interne Sicherheitsanzeige kann vorteilhaft über ein Standardprotokoll, das SNMP (Simple Network Management Protocol) abgefragt werden. Der Sicherheitsstatur aller Geräte eines Automatisierungssystems kann somit durch Netzwerkmanagement-Tools überwacht werden. Der Zugang zum Sicherheitsstatus des jeweiligen Geräts erfolgt hierbei über eine sogenannte Management Information Base (MIB). Die Nutzung von standardmäßig zur Verfügung stehenden Protokollen wird somit möglich, und eine Verwendung weiterer Hilfsmittel für die Implementierung eines entsprechenden Sicherheitsinformationssystem erübrigt sich.

Eine weitere vorteilhafte Ausbildung ist dadurch gekennzeichnet, dass das System zur Verknüpfung der Statusanzeigen der internen Anzeigemittel mehrerer Geräte zu Sammelanzeigen eines Gesamtsicherheitsstatus der beteiligten Geräte vorgesehen ist. Diese Sammelanzeigen können, bei zunehmender Komplexität des Systems durch hohe Anzahl beteiligter Geräte, auf einfache Weise darüber Auskunft geben, ob der jeweilige Teil des Systems mit den vorgesehenen Sicherheitseinrichtungen ausgestattet ist, bzw. ob sie aktiv sind. Dem Benutzer wird hierdurch eine Betrachtung jedes einzelnen im System vorhandenen Gerätes erlassen. Die Sicherheitsstatusinformation kann schnell erfasst werden und es herrscht jederzeit ein überblick über den Gesamtstatus.

Eine weitere vorteilhafte Ausbildung der Erfindung ist dadurch gekennzeichnet, dass die Sammelanzeigen zur externen visuellen Anzeige vorgesehen sind. Auch Sammelanzeigen können somit vorteilhaft über die üblichen Ausgabekanäle beispielsweise auf Schrankmeldelampen oder Warteanzeigen ausgegeben werden. Eine leicht erkennbare Anzeige des Sicherheitsstatus ist somit auch auf höherer Ebene gewährleistet.

Eine weitere vorteilhafte Ausbildung der Erfindung ist dadurch gekennzeichnet, dass die Sammelanzeigen zur Weiterleitung über die Vorrichtung zur Übertragung von Daten zu hierarchischen Verknüpfung zu jeweils höherwertigen Sammelanzeigen vorgesehen sind. Dies gibt die Möglichkeit, die Sicherheitsanzeigen einer Anlage hierarchisch zu organisieren. Ab einem bestimmten Komplexitätsgrad werden die Sicherheitsanzeigen der jeweils untergelagerten Geräte zusammengefasst. Die Zusammenfassung erfolgt hierbei auf Basis der internen Anzeigen der Geräte. Komplexe Systeme können auf diese Weise mit einer einfachen und übersichtlichen Sicherheitsstatusinformationen ausgestattet werden. So ist z.B. eine Aufteilung der Anzeigen der Sicherheitsstatus für bestimmte Produktionsabschnitte möglich oder auch die Anzeige der jeweiligen Sicherheitszustände bei der Verteilung eines Automatisierungssystems über mehrere Standorte. Die Möglichkeit der hierarchischen Struktur sorgt hierbei für eine höhere Übersicht über das gesamte System. Die hierarchische Zusammenführung der Anzeigen innerhalb des Systems ermöglicht zudem eine sogenannte Sicherheits-Diagnose, da die Rückverfolgung der jeweiligen Anzeige des Sicherheitsstatus innerhalb des Systems ermöglicht wird.

Eine weitere vorteilhafte Ausbildung des Systems ist dadurch gekennzeichnet, dass mindestens ein Server zur Verwaltung und Anzeige des jeweiligen Status der Sammelanzeigen vorgesehen ist. Ab einem bestimmten Komplexitätsgrad wird es ermöglicht, einen übergeordneten Server (CSSA, Central Security Server for Automation) zu verwenden. Dieser Server fasst die Sicherheitsanzeigen der unterlagerten Geräte zusammen, wobei die Zusammenfassung auf Basis der internen Anzeigen der Geräte erfolgt. Eine flache Hierarchiestruktur wird hierbei angestrebt. Vorteilhaft ist hierbei vor allem, dass der Server als Steuerung oder auch als PC ausgeführt sein kann. Der Server speist beispielsweise konventionelle Anzeigen, die für die Wartung des Systems verwendet werden oder die Anzeigen von Bedien- und Beobachtungssystemen. Für die Verwaltung und Anzeige des Sicherheitsstatus innerhalb des Systems wird durch die Verwendung dieser Server gewährleistet, dass keine zusätzliche Hardware eingeführt werden muss. Eine kostengünstige Verwaltung und Anzeige des Sicherheitsstatus innerhalb des Systems ist somit gegeben.

Eine weitere vorteilhafte Ausbildung des Systems ist dadurch gekennzeichnet, dass das System zur Simulation des Sicherheitsstatus der internen Anzeigemittel vorgesehen ist. Die Simulation der Sicherheitsanzeige ist speziell von Vorteil in Situationen wie beispielsweise der Inbetriebnahme. Während dieser Phase ist die Möglichkeit gegeben, einen Anzeigewert vorzugeben. Das System kann dadurch auf seine Funktion hin während der Inbetriebnahme getestet und überprüft werden. Um bei der Simulation die Sicherheitsrisiken zu verringern, wird für die Durchführung der Simulation eine besondere Autorisierung (beispielsweise Schlüsselschalter) gefordert. Die Simulation wird außerdem nach einer vom Hersteller vorgegebenen Zeit abgebrochen. Diese vorgegebene Zeit kann durch eine entsprechende Projektierung und/oder Parametrierung weiter eingeschränkt werden. Das Aktivieren der Simulation ist ein Parameter des Sicherheitssystems auf den Geräten bzw. auch auf dem Server. Sicherheitsparameter können unter Berücksichtigung des notwendigen Zugriffsschutzes von einem automatisierungstechnischen Anwenderprogramm beispielsweise über einen speziellen System-Baustein und/oder über SNMP verändert werden.

Eine weitere vorteilhafte Ausbildung der Erfindung ist dadurch gekennzeichnet, dass das System zur Integration von Geräten ohne interne Sicherheits-Mechanismen durch Stellvertreter vorgesehen ist. Hierdurch wird ermöglicht, Geräte die über keine kompatible interne Sicherheitsanzeige bzw. keine Sicherheitserweiterungen verfügen, über einen Stellvertreter in das sichere System zu integrieren. Es handelt sich hierbei beispielsweise um Altgeräte, Geräte von Fremdherstellern oder Low-Cost-Geräte. Zugänge aus dem sicheren System zu diesen Geräten bzw. umgekehrt Zugänge von diesen Geräten in das sichere System werden durch den jeweiligen Stellvertreter geregelt, der mittels eines Schutzmechanismus Zugriffe erlaubt oder sie abweist. Hierbei ist der Stellvertreter voll in das beschriebene System der Sicherheitserkennung und Anzeige integriert. Er besitzt jedoch neben dem eigenen Mechanismus zur Sicherheitserfassung zusätzliche Mechanismen zur Integration gegebenenfalls vorhandener oder inkompatibler Mechanismen der Sicherheitserkennung und Anzeige. Diese Integration erlaubt es ihm, systemkonforme Sicherheitsanzeigen stellvertretend für seine unterlagerten Geräte zu bilden. Die Schutzmechanismen des Stellvertreters lassen sich für spezielle Situationen mit einer besonderen Berechtigung deaktivieren. Die Deaktivierung fließt in die Sicherheitsanzeige des Stellvertreters ein. Hier besteht ebenfalls eine Simulationsmöglichkeit.

Eine weitere vorteilhafte Ausbildung der Erfindung ist dadurch gekennzeichnet, dass die Vorrichtung zur Übertragung von Daten zwischen den Geräten eines Komplexes als Intranet und/oder Internet ausgebildet ist. Hierdurch wird die Möglichkeit gegeben, dass gesamte Sicherheitssystem auch standortübergreifend zu nutzen, da Datenübertragung über das Internet ermöglicht wird. Außerdem bietet das Internet eine kostengünstige Möglichkeit der Datenübertragung, da keine eigene Infrastruktur zu diesem Zweck aufgebaut werden muss.

Im folgenden wird die Erfindung anhand der in den Figuren dargestellten Ausführungsbeispiele näher beschrieben und erläutert. Es zeigen:
- FIG 1: ein Automatisierungsgerät mit einer sichtbaren Sicherheitsanzeige;
- FIG 2: eine schematische Darstellung eines Geräts mit äußerer und innerer Sicherheitsanzeige;
- FIG 3: eine schematische Darstellung des Zugriffs auf die Sicherheitsanzeige über Standardprotokolle;
- FIG 4: eine schematische Darstellung der Zugriffsmöglichkeit über Standardautomatisierungsanwendungen;
- FIG 5: eine schematische Darstellung des Zusammenfassens von Sicherheitsanzeigen zu Sammelanzeigen;
- FIG 6: eine schematische Darstellung eines Automatisierungssystems mit hierarchisch gegliederten Sammelanzeigen;
- FIG 7: eine schematische Darstellung eines sicheren Stellvertreters für Geräte ohne eigene Sicherheitsmechanismen.

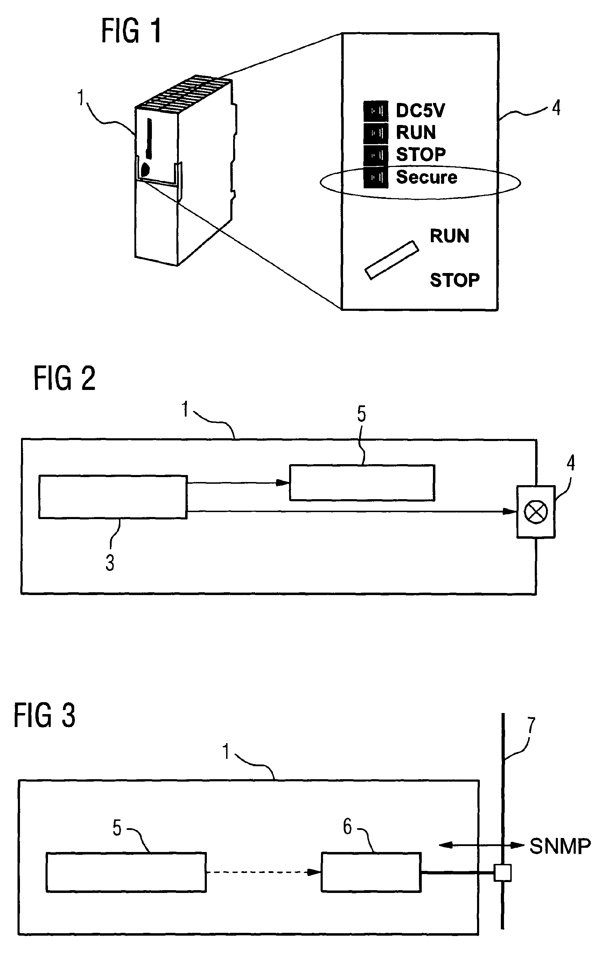

FIG 1 zeigt eine beispielhafte Ausführung der äußeren Anzeige 4 für den Sicherheitsstatus eines Automatisierungsgeräts 1. Die Anzeige 4 findet sich auf dem Gerät 1 an geeigneten Stellen, die auch im eingebauten Zustand gut sichtbar sind. Die Anzeige 4 wird wie in der beispielhaften Darstellung auf der Frontplatte angebracht. Es werden beispielsweise Lampen oder Leuchtdioden für die Anzeige 4 verwendet. Eine Verwendung solcher Lampen sorgt für eine gute Sichtbarkeit der Anzeige 4 und ein einfaches Ablesen wird hierdurch gewährleistet. Um verschiedene Sicherheitsaspekte anzuzeigen, können für die Anzeige 4 gegebenenfalls verschiedene Farben verwendet werden oder auch verschiedene Zustände, beispielsweise ein Dauerlicht oder Blinken. Es können auch mehrere Anzeigen parallel verwendet werden, die unterschiedliche Zugriffsaspekte signalisieren. Vorteilhaft ist bei dieser Ausbildung vor allem, dass die Realisierung der Anzeige mit Hilfe von einfachen Leuchtdioden oder Lampen auf einem ohnehin extern angebrachten Display eine kostengünstige Lösung darstellt.

FIG 2 zeigt eine schematische Darstellung eines Geräts 1, welches über eine externe Anzeige 4, die einen Sicherheitsstatus des Geräts 1 extern anzeigt, sowie über eine interne Anzeige 5 für einen internen Sicherheitsstatus des Geräts 1 verfügt. Der Sicherheitsstatus des Geräts 1 wird über einen Detektormechanismus 3 erfasst. Der Detektormechanismus 3 erkennt, ob das Gerät 1 sich in einem sicheren Zustand befindet.

Vorteilhaft bei der dargestellten Ausbildung der Erfindung ist vor allem, dass das Gerät 1 seinen Sicherheitszustand sowohl nach außen visuell über die externe Anzeige 4 als auch intern über die interne Anzeige 5 anzeigen kann. Die interne Anzeige 5 bildet hierbei die Grundlage für eine technische Weiterverarbeitung. Sie ermöglicht beispielsweise das Zusammenfassen von Sicherheitsanzeigen mehrerer Geräte zu sogenannten Sammelanzeigen. Die interne und externe Anzeige 4, 5 können wie in der beispielhaften Ausführung dargestellt vom gleichen Detektormechanismus 3 zur Erkennung des Zustandes gespeist werden. Es ist jedoch auch vorstellbar, das die äußere Anzeige 4 von der internen Anzeige 5 abgeleitet wird. Das dargestellte Ausführungsbeispiel zeigt eine einfache Realisierungsmöglichkeit für die Implementierung von Sicherheitsanzeigen sowohl im äußeren als auch im inneren Bereich auf. Bei der inneren Anzeige 5 kann es sich hierbei um einen einfachen Mechanismus handeln, wie beispielsweise das Setzen eines Flags. Dieses Flag kann dann von automatisierungstechnischen Anwenderprogrammen gelesen und auf einfache Weise interpretiert werden.

FIG 3 zeigt eine beispielhafte Ausführung für den Zugriff von Standardnetzwerkprotokollen auf die Sicherheitsanzeige eines Geräts 1. Der Zugriff wird hierbei über eine sogenannte Management Information Base (MIB) 6 realisiert. Die Management Information Base 6 befindet im Gerät 1 und ist dort in der Lage, den gesetzten Status der internen Anzeige 5 abzulesen und einen Zugriff von außen auf die Anzeige 5 zu ermöglichen. Hierbei wird über eine Datenübertragungsvorrichtung 7 die Information weitergeleitet. Zur Weiterleitung werden sogenannte Simple Network Management Protokolle (SNMP) verwendet.

Vorteilhaft ist bei der dargestellten Ausführung vor allem, dass Standardprotokolle zur Weiterleitung verwendet werden können, die auf TCP/IP basierten Netzen zur Anwendung kommen. Eine aufwendige Implementierung zusätzlicher Datenübertragungsvorrichtungen erübrigt sich in diesem Fall. Der Sicherheitsstatus eines Geräts bzw. des gesamten Automatisierungssystem kann mit Hilfe einfacher Netzwerkmanagement-Tools überwacht werden.

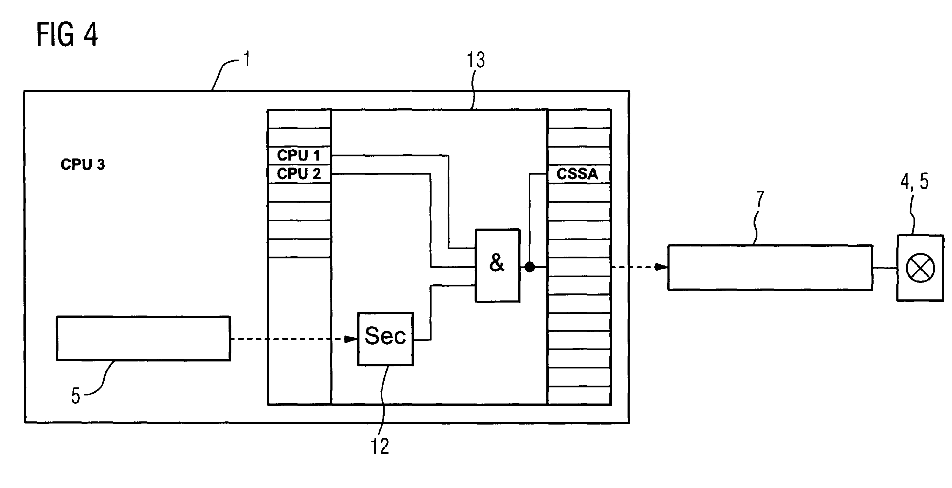

FIG 4 zeigt eine beispielhafte Ausführung der Erfindung, bei der ein automatisierungstechnisches Anwenderprogramm 13 auf die interne Sicherheitsanzeige 5 eines Automatisierungsgeräts 1 zugreifen kann. Der Zugriff wird mit Hilfe spezieller Funktionsbausteine 12 ermöglicht. Die Sicherheitsanzeigen können über eine Datenübertragungsvorrichtung 7 an entsprechende Anzeigemittel 4, 5 weitergeleitet werden.

Vorteilhaft ist bei der dargestellten Ausbildung vor allem, dass ein direkter Zugriff der Anwenderprogramme ermöglicht wird. Hierdurch ist eine Verschaltung der Sicherheitsanzeigen von einzelnen Komponenten zu Sammelanzeigen innerhalb der Anwenderprogramme möglich. Die Sicherheitsanzeigen können dementsprechend wie Automatisierungsfunktionen projektiert werden und der entsprechende Teil der Anwenderprogramme kann in diesem Fall gegen unberechtigte Veränderung geschützt werden. Die Datenübertragung kann über normale Netzwerke wie beispielsweise Feldbusse realisiert werden. Die beispielhafte Ausgestaltung des erfindungsgemäßen Systems ermöglicht eine einfache Projektierung des Sicherheitssystems innerhalb der Automatisierungssysteme.

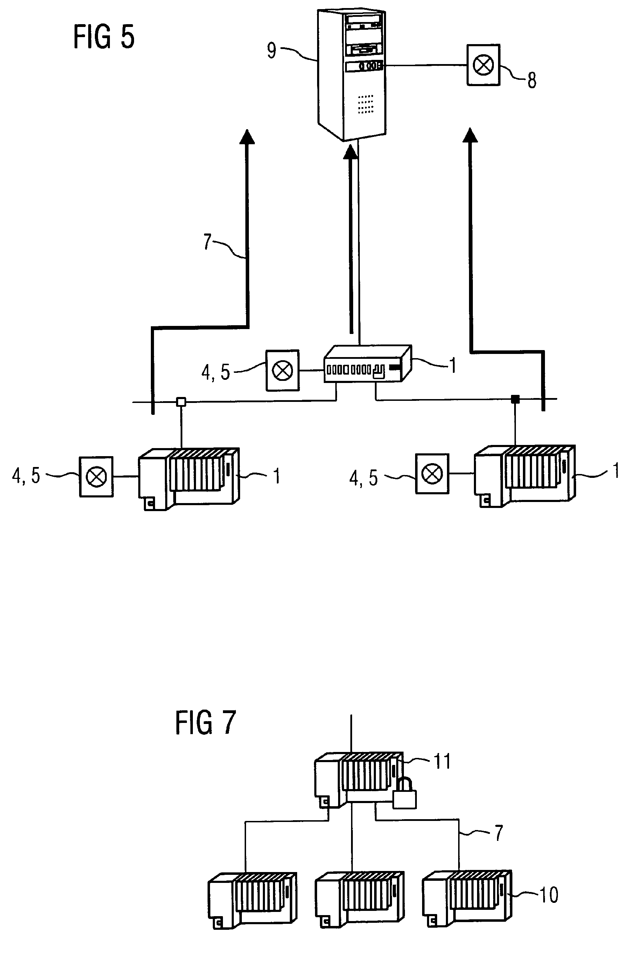

FIG 5 zeigt eine beispielhafte Ausgestaltung des Sicherheitssystems, bei dem die Sicherheitsanzeigen 4, 5 der einzelnen Geräte 1 über eine Datenübertragungsvorrichtung 7 weitergeleitet werden an einen Server 9 und dort in Form einer Sammelanzeige 8 dargestellt werden. Vorteilhaft ist bei der dargestellten Ausbildung, das die Sicherheitsanzeigen der einzelnen Geräte zu einer Sammelanzeige 8 zusammengefasst werden können. Ab einen bestimmten Komplexitätsgrad wird hierzu ein übergeordneter Server 9, ein sogenannter Central Security Server for Automation, CSSA eingeführt. Der Server 9 fasst die Sicherheitsanzeigen der untergelagerten Geräte 1 zusammen. Die Zusammenfassung erfolgt auf Basis der internen Anzeigen 5 der Geräte 1, wobei eine flache Struktur angestrebt wird.

Vorteilhaft ist bei der dargestellten Ausführung vor allem, das der CSSA 9 als einfache Steuerung oder PC oder ähnliches ausgeführt sein kann. Die Einführung spezieller Geräte für die Anzeige der Sammelanzeigen ist somit nicht nötig. Die Verwendung vorhandener Geräte innerhalb des Automatisierungssystem ermöglicht eine kostengünstige Realisierung. Der Server 9 kann hierbei auch konventionelle Anzeigen beispielsweise über Bedien- und Beobachtungssysteme speisen. Hierbei gibt die Sammelanzeige 8 keine Auskunft über die absolute Sicherheit eines Systems. Sie zeigt vielmehr an, ob die vorgesehenen Sicherheitseinrichtungen aktiv sind.

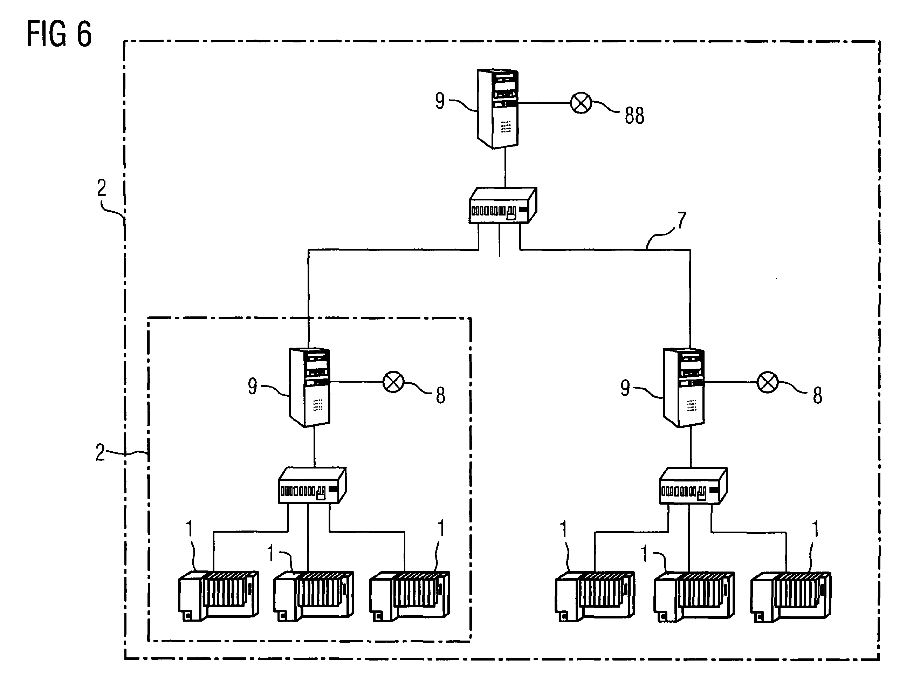

FIG 6 zeigt eine beispielhafte Ausführung einer hierarchischen Gliederung des Sicherheitssystems. Hierbei werden die Sicherheitsanzeigen 5 einzelner Geräte 1 über Datenübertragungsvorrichtungen 7 weitergeleitet zu Servern 9, die die Sicherheitssysteme der untergelagerten Geräte in einer Sammelanzeige 8 darstellen, diese Sammelanzeigen 8 werden innerhalb des Systems wiederum über eine Datenübertragungsvorrichtung 7 an höherwertige Server 9 weitergeleitet, diese Server 9 speisen höherwertige Sammelanzeigen 88. Die Sammelanzeigen 88 zeigen den Sicherheitsstatus des gesamten Systems mit allen untergelagerten Teilen. Hierbei werden mehrere Geräte 1 zu einem sogenannten Gerätekomplex 2 zusammengefügt.

Vorteilhaft ist bei der dargestellten Ausführungsform vor allem, dass ein Anwender auf allen Ebenen eines Systems, beispielsweise eines Automatisierungssystems einen Überblick über den aktuellen Sicherheitsstatus erhält. Darauf aufbauend können wichtige Bedienungen durchgeführt bzw. unterlassen werden. Security-Löcher und/oder Eindringlinge lassen sich finden und gegebenenfalls beseitigen und es können Fehler in der Sicherheitsprojektierung erkannt werden. Die Strukturierung des Sicherheitssystems in mehrere Hierarchieebenen ermöglicht außerdem ein einfaches Einhängen neuer Gerätekomplexe. Sie macht die Gesamtlösung skalierbar und berücksichtigt Migrationsmöglichkeiten.

Speziell für die Sicherheitsdiagnose ist die vorgeschlagene hierarchische Struktur von Vorteil, da eine Rückverfolgung über die jeweiligen Pfade innerhalb der Struktur ermöglicht wird. Hierbei kann dann genau festgestellt werden, in welchem Komplex 2 die Sicherheitsfunktionen fehlerhaft sind. Die Diagnose wird realisiert über einen projektierten Austausch der Signale für die Sicherheitsanzeige über automatisierungstechnische Anwenderprogramme, wie beispielsweise Funktionspläne, hierbei wird eine Rückverfolgung über die Anzeige des auslösenden Pfades (bei Logikverknüpfungen) auf dynamisierten Funktionsplänen (d.h. Funktionspläne mit Anzeige der aktuellen Werte) durchgeführt. Eine Kriterienanalyse, d.h. das automatische Feststellen von Abweichungen gegenüber dem Sollzustand mit entsprechender Rückverfolgung bis zum Verursacher wird durchgeführt. Des Weiteren kann über SNMP eine Abfrage der relevanten MIB-Anzeigen erfolgen. Eine Rückverfolgung absteigend in der Hierarchie wird über regelbasierte Auswertung der Ursache bzw. des Auslösers durchgeführt, wobei die Regeln aus einer Sicherheitsprojektierung des Systems erzeugt werden.

FIG 7 zeigt eine beispielhafte Ausführung des Sicherheitssystems, bei dem Geräte 10, welche nicht über eigene Sicherheitsmechanismen verfügen durch einen Stellvertreter 11 repräsentiert werden. Die Datenübertragung erfolgt hierbei über die Datenübertragungsvorrichtung 7.

Der Vorteil bei dem dargestellten Ausführungsbeispiel liegt vor allem in der Möglichkeit, über die Stellvertreter Geräte in das System zu integrieren, welche keine eigene Sicherheitsanzeige bzw. keine Sicherheitserweiterungen haben. Hierbei kann es sich beispielsweise um Altgeräte, Geräte von Fremdherstellern oder Low-cost-Geräte handeln. Die Möglichkeit der Integration solcher Geräte ist vor allem in einer Übergangsphase von Vorteil, da sie eine Möglichkeit darstellt, ein sicheres System zu etablieren, ohne gleichzeitig auf der gesamten Anlage im Automatisierungssystem alle Geräte auswechseln zu müssen. Eine kostengünstige Möglichkeit, ein sicheres System aufzubauen, wird hierdurch gegeben. Die Zugänge aus dem sicheren System zu den Geräten 10, welche keine eigenen Sicherheitsmechanismen besitzen bzw. umgekehrt die Zugänge von diesen Geräten 10 in das sichere System werden hierbei durch den jeweiligen Stellvertreter 11 geregelt. Ein Schutzmechanismus erlaubt also Zugriffe oder weist sie ab. Der Stellvertreter 11 wird hierbei voll in das beschriebene System der Sicherheitserkennung und Anzeige integriert. Neben einem ihm eigenen Mechanismus zur Sicherheitsstatuserkennung besitzt er weitere Mechanismen zur Integration gegebenenfalls vorhandener aber inkompatibler Mechanismen der Sicherheitserkennung bzw. Anzeige. Diese Integration erlaubt es ihm, systemkonforme Sicherheitsanzeigen stellvertretend für seine unterlagerten Geräte 10 zu bilden. Die Schutzmechanismen des Stellvertreters 11 lassen sich für spezielle Situationen mit einer besonderen Berechtigung deaktivieren. Die Deaktivierung fließt in die Sicherheitsanzeige des Stellvertreters 11 ein. Der Stellvertreter 11 bezieht die Informationen über die Sicherheit der unterlagerten Geräte 10 beispielsweise direkt von diesen Geräten. Hierbei können die Geräte die Information in verschiedenen Formaten anbieten. Der Stellvertreter 11 kann die Information über den Sicherheitsstatus der Geräte 10 auch selbst besitzen bzw. selbst regeln. In diesem Fall a-giert er nachdem Firewall-Prinzip. Der Stellvertreter 11 ist für die Sicherheit der ihm unterlagerten Geräte 10 verantwortlich.

Die Erfindung betrifft zusammenfassend ein System sowie ein Verfahren zum Erfassen und zur Anzeige eines Sicherheitsstatus von Geräten, insbesondere Automatisierungsgeräten bzw. - systemen. Die Geräte 1 besitzen einen Detektormechanismus 3 zur Erkennung eines Sicherheitsstatus sowie eine externe 4 und eine interne Anzeige 5 für den jeweiligen Status. Über eine Management Information Base (MIB) 6 kann mithilfe von Simple Network Management Protokollen (SNMP) auf die interne Anzeige 5 zugegriffen werden. Der Status der internen Anzeige wird über eine Datenübertragungsvorrichtung 7 innerhalb des Systems weitergeleitet und mithilfe von Central Security Server für Automation (CSSA) verarbeitet. Sammelanzeigen 8, 88 können auf beliebiger Hierarchieebene im System den Sicherheitsstatus der jeweiligen unterlagerten Geräte 1 bzw. Gerätekomplexe 2 anzeigen. Geräte ohne Sicherheitsfunktionalität 10 können durch einen Stellvertreter 11 in das System integriert werden.

## Patentansprüche

1. System zur Anzeige und/oder Erfassung eines Sicherheitsstatus von Geräten (1), welche über interne Sicherheits-Mechanismen verfügen, und/oder von aus derartigen Geräten (1) zusammengesetzten Komplexen (2) mit
- geräteinternen Mitteln (3) zum Feststellen des Sicherheitsstatus mindestens eines Geräts (1),
- mindestens einer Anzeigevorrichtung (4) zur externen Anzeige des Sicherheitsstatus mindestens eines Geräts (1) direkt am Gerät (1),
- Anzeigemitteln (5) zur internen Anzeige des Sicherheitsstatus mindestens eines Geräts (1) direkt im Gerät (1) und
- einer Vorrichtung (7) zur Übertragung von Daten zwischen den Geräten (1) eines Komplexes (2),
wobei der Status der Anzeigemittel (5) zur datentechnischen Weiterverarbeitung im Komplex (2) vorgesehen ist.

2. System nach Anspruch 1,
**dadurch gekennzeichnet,**
**dass** das System zur Anzeige und/oder Erfassung des Sicherheitsstatus von Automatisierungsgeräten und/oder Automatisierungssystemen vorgesehen ist.

3. System nach einem der vorhergehenden Ansprüche,
**dadurch gekennzeichnet,**
**dass** die Anzeigevorrichtung (4) zur visuellen Anzeige des Sicherheitsstatus vorgesehen ist.

4. System nach einem der vorhergehenden Ansprüche,
**dadurch gekennzeichnet,**
**dass** Zugriffsmittel (12) für automatisierungstechnische Anwenderprogramme (13) auf die internen Anzeigemittel (5) vorgesehen sind.

5. System nach einem der vorhergehenden Ansprüche,
**dadurch gekennzeichnet,**
**dass** eine Abfrage des Sicherheitsstatus der internen Anzeigemittel (5) durch Standardprotokolle über eine geräteinterne Informationsbasis (6) vorgesehen ist.

6. System nach einem der vorhergehenden Ansprüche,
**dadurch gekennzeichnet,**
**dass** das System zur Verknüpfung der Statusanzeigen der internen Anzeigemittel (5) mehrerer Geräte (1) zu Sammelanzeigen (8) eines Gesamtsicherheitsstatus der beteiligten Geräte (1) vorgesehen ist.

7. System nach einem der vorhergehenden Ansprüche,
**dadurch gekennzeichnet,**
**dass** die Sammelanzeigen (8) zur externen visuellen Anzeige vorgesehen sind.

8. System nach einem der vorhergehenden Ansprüche,
**dadurch gekennzeichnet,**
**dass** die Sammelanzeigen (8) zur Weiterleitung über die Vorrichtung (7) zur Übertragung von Daten zur hierarchischen Verknüpfung zu jeweils höherwertigen Sammelanzeigen (88) vorgesehen sind.

9. System nach einem der vorhergehenden Ansprüche,
**dadurch gekennzeichnet,**
**dass** mindestens ein Server (9) zur Verwaltung und Anzeige des jeweiligen Status der Sammelanzeigen (8, 88) vorgesehen ist.

10. System nach einem der vorhergehenden Ansprüche,
**dadurch gekennzeichnet,**
**dass** das System zur Simulation des Sicherheitsstatus der internen Anzeigemittel (5) vorgesehen ist.

11. System nach einem der vorhergehenden Ansprüche,
**dadurch gekennzeichnet,**
**dass** das System zur Integration von Geräten (10) ohne interne Sicherheits-Mechanismen durch Stellvertreter (11) vorgesehen ist.

12. System nach einem der vorhergehenden Ansprüche,
**dadurch gekennzeichnet,**
**dass** die Vorrichtung (7) zur Übertragung von Daten zwischen den Geräten eines Komplexes als Intranet und/oder Internet (11) ausgebildet ist.

13. Verfahren zur Anzeige und/oder Erfassung eines Sicherheitsstatus von Geräten (1) mit internen Sicherheits-Mechanismen und/oder aus derartigen Geräten (1) zusammengesetzten Komplexen (2) bei dem
- der Sicherheitsstatus mindestens eines Geräts (1) festgestellt wird,
- der Sicherheitsstatus mindestens eines Geräts (1) direkt am Gerät extern angezeigt wird,
- der Sicherheitsstatus mindestens eines Geräts (1) direkt im Gerät intern angezeigt wird und
- Daten zwischen den Geräten (1) eines Komplexes (2) übertragen werden,
wobei der jeweils intern angezeigte Sicherheitsstatus datentechnisch im Komplex (2) weiterverarbeitet werden kann.

14. Verfahren nach Anspruch 13,
**dadurch gekennzeichnet,**
**dass** der Sicherheitsstatus von Automatisierungsgeräten und/oder Automatisierungssystemen angezeigt und/oder erfasst wird.

15. Verfahren nach den Ansprüchen 13 oder 14,
**dadurch gekennzeichnet,**
**dass** der Sicherheitsstatus visuell angezeigt wird.

16. Verfahren nach einem der Ansprüche 13 bis 15,
**dadurch gekennzeichnet,**
**dass** automatisierungstechnische Anwenderprogramme (13) über Zugriffsmittel (12) auf die internen Anzeigemittel (5) zugreifen.

17. Verfahren nach einem der Ansprüche 13 bis 16,
**dadurch gekennzeichnet,**
**dass** der Sicherheitsstatus der internen Anzeigemittel (5) durch Standardprotokolle über eine geräteinterne Informationsbasis (6) abgefragt wird.

18. Verfahren nach einem der Ansprüche 13 bis 17,
**dadurch gekennzeichnet,**
**dass** die Statusanzeigen der internen Anzeigemittel (5) mehrerer Geräte (1) zu Sammelanzeigen (8) über einen Gesamtsicherheitsstatus der beteiligten Geräte (1) verknüpft werden.

19. Verfahren nach einem der Ansprüche 13 bis 18,
**dadurch gekennzeichnet,**
**dass** die Sammelanzeigen (8) extern visuell angezeigt werden.

20. Verfahren nach einem der Ansprüche 13 bis 19,
**dadurch gekennzeichnet,**
**dass** die Sammelanzeigen (8) zu hierarchisch höherwertigen Sammelanzeigen (88) verknüpft werden.

21. Verfahren nach einem der Ansprüche 13 bis 20,
**dadurch gekennzeichnet,**
**dass** der jeweilige Status der Sammelanzeigen (8, 88) durch mindestens einen Server (9) angezeigt und verwaltet wird.

22. Verfahren nach einem der Ansprüche 13 bis 21,
**dadurch gekennzeichnet,**
**dass** der Sicherheitsstatus der internen Anzeigemittel (5) simuliert werden kann.

23. Verfahren nach einem der Ansprüche 13 bis 22,
**dadurch gekennzeichnet,**
**dass** Geräte (10) ohne interne Sicherheits-Mechanismen durch Stellvertreter (11) integriert werden.

24. Verfahren nach einem der Ansprüche 13 bis 23,
**dadurch gekennzeichnet,**
**dass** Daten zwischen den Geräten (1) eines Komplexes (2) über Intranet und/oder Internet übertragen werden.

25. Automatisierungsgerät zur Anzeige eines Sicherheitsstatus mit
- geräteinternen Mitteln (3) zum Feststellen des Sicherheitsstatus des Automatisierungsgeräts (1),
- mindestens einer Anzeigevorrichtung (4) zur externen Anzeige des Sicherheitsstatus des Automatisierungsgeräts (1) direkt am Gerät (1),
- Anzeigemitteln (5) zur internen Anzeige des Sicherheitsstatus des Automatisierungsgeräts (1) direkt im Gerät (1).

26. Automatisierungsgerät nach Anspruch 25,
**dadurch gekennzeichnet,**
**dass** die Anzeigevorrichtung (4) zur visuellen Anzeige des Sicherheitsstatus vorgesehen ist.

27. Automatisierungsgerät nach einem der Ansprüche 25 oder 26,
**dadurch gekennzeichnet,**
**dass** Zugriffsmittel (12) für automatisierungstechnische Anwenderprogramme (13) auf die internen Anzeigemittel (5) vorgesehen sind.

28. Automatisierungsgerät nach einem der Ansprüche 25 bis 27,
**dadurch gekennzeichnet,**
**dass** eine Abfrage des Sicherheitsstatus der internen Anzeigemittel (5) durch Standardprotokolle über eine geräteinterne Informationsbasis (6) vorgesehen ist.
